# EUROPÄISCHE PATENTSCHRIFT

(11) **EP 4 257 332 B1**
(45) Veröffentlichungstag und Bekanntmachung des Hinweises auf die Patenterteilung: **11.06.2025**
(21) Anmeldenummer: 23000013.5
(22) Anmeldetag: 25.01.2023
(51) Int. Cl.: B29C 48/00, B29C 48/88, B29C 48/355, B29C 48/10, B29C 48/08, B29C 48/92, B29C 55/28, B29C 55/06

(54) **VERFAHREN UND VORRICHTUNG ZUR FOLIENDICKENREGELUNG VON GERECKTER IM FOLIENBLASVERFAHREN HERGESTELLTER SCHLAUCHFOLIE**
METHOD AND DEVICE FOR CONTROLLING THE THICKNESS OF STRETCHED TUBULAR FILM PRODUCED BY THE FILM BLOW-MOULDING METHOD
PROCÉDÉ ET DISPOSITIF DE RÉGULATION DE L'ÉPAISSEUR D'UNE FEUILLE TUBULAIRE ÉTIRÉE FABRIQUÉE PAR SOUFFLAGE DE FILM

(30) Priorität: 29.01.2022 DE 102022000351
(43) Veröffentlichungstag der Anmeldung: 11.10.2023
(73) Patentinhaber: HOSOKAWA ALPINE Aktiengesellschaft, 86199 Augsburg (DE)
(72) Erfinder: Bayer, Bernd, 86339 Bobingen (DE); Scharpf, Georg, 86444 Mühlhausen (DE); Schüle, Hans-Peter, 86156 Augsburg (DE)

(56) Entgegenhaltungen:
- WO-A1-2015/055170
- DE-A1- 102016 012 389
- DE-A1- 102016 012 424
- DE-A1- 102019 107 335
- DE-A1- 102019 215 492
- DE-B4- 102009 033 171
- DE-U1- 202013 012 786

## Beschreibung

Die Erfindung richtet sich auf ein Verfahren nach dem Oberbegriff des Anspruchs 1 und einer Vorrichtung dazu. Die Erfindung betrifft eine Verfahren zur Regelung der Foliendicke von verstreckten Schlauchfolien, die im Folienblasverfahren hergestellt, in einem Wendeabzug flachgelegt und verlegt, in einer Reckanlage monoaxial in Maschinenrichtung verstreckt und in einem Wickler aufgewickelt werden. Das Foliendickenprofil der in der Folienblasanlage hergestellten Schlauchfolie wird mit einem Regelsystem aus segmentierten Regelzonen und mindestens zwei Messeinrichtungen für die Foliendicke, so geregelt, dass das vorgegebene Foliendickensollprofil Abweichungen von einer einheitlichen Foliendicke in Form von einer oder zwei gegenüberliegender Dünnstellen aufweist, welche der Kompensation der Foliendickenänderung über die Folienbreite, die bei der monoaxialen Verstreckung in Maschinenrichtung entstehen, dienen, so dass durch das Recken Folien mit einem Foliendickenprofil über die Folienbreite mit möglichst geringen Abweichungen von der Foliensolldicke über die gesamte Folienbreite hergestellt werden.

Weiterhin betrifft die Erfindung eine Vorrichtung zur Durchführung des Verfahrens.

Für die Herstellung von reckfähigen Kunststofffolien ist das Folienblasverfahren geeignet. Dabei wird über eine Dosiervorrichtung Kunststoffgranulat einem Extruder zugeführt, aufgeschmolzen und einem Folienblaskopf zugeführt. Der Folienblaskopf weist eine Ringdüse auf, aus der die extrudierte Kunststoffmasse austritt und zu einer Schlauchfolie ausgeformt und mit Kühlluft aufgeblasen wird. Gleichzeitig wird die Schlauchfolie von außen durch Kühlluft aus einem Kühlring gekühlt. Die Schlauchfolie durchläuft einen Kalibrierkorb. Nach dem Erstarren des Kunststoffs wird die Schlauchfolie in einer Flachlegeeinheit flachgelegt und über einen Wendeabzug geführt. Anschließend wird die flachgelegte Folie einem Wickler zugeführt und zu einem Folienwickel aufgerollt. Die flachgelegte Schlauchfolie kann in einer zwischen Wendeabzug und Wickler angeordneten Reckanlage monoaxial in Maschinenrichtung verstreckt werden, alternativ kann die flachgelegte Schlauchfolie in einer Reckanlage im Wendeabzug, zwischen Abzugswalzenpaar und Wendestange gereckt werden, wodurch sich Folien mit einer reduzierten Foliendicke ergeben. Durch das Recken werden Folieneigenschaften wie Zugfestigkeit, Steifigkeit, Transparenz, Barriereeigenschaften und/oder Maschinengängigkeit verbessert. Diese Folien finden z. B. Einsatz in flexiblen Verpackungen.

Bei der Herstellung von Schlauchfolien kommen Foliendickenprofilregelsysteme mit segmentierten Regelzonen zum Einsatz. Durch diese Systeme lässt sich das Foliendickenprofil derart regeln, dass die Dickenabweichungen von einer mittleren Foliendicke über den gesamten Schlauchumfang möglichst gering sind.

Die DE 10 2009 033 171 B4 offenbart ein Verfahren zur Regelung der Foliendicke von Schlauchfolien, die im Folienblasverfahren hergestellt und anschließend im flachgelegten Zustand in einer Reckanlage monoaxial in Maschinenrichtung verstreckt wird. Weiterhin offenbart die DE 10 2009 033 171 B4 eine Vorrichtung zur Durchführung des Verfahrens. Um Folien mit möglichst einheitlicher mittlerer Foliendicke zu erreichen wird der Schlauchfolie ein oder zwei gegenüberliegende Dünnstelle aufgeprägt. Zur Regelung des Foliendickenprofils wird das Foliendickenistprofil am Umfang der Schlauchfolie zwischen segmentierter Regeleinheit und Wendeabzug erfasst und das Foliendickenistprofil der flachgelegten und verstreckten Folie über deren Breite zwischen der Reckanlage und dem Wickler erfasst. Die von den Messeinrichtungen gemessenen Foliendickenistprofile werden der Anlagensteuerung zugeführt und mittels kaskadierter Regelung die Foliendicke über die segmentierte Regelzone geregelt.

Die DE 10 2019 215 492 A1 offenbart eine Blasfolienanlage mit mindestens zwei Dickenmesseinrichtungen zur Messung des Foliendickenprofils nach einer Streckeinrichtung, wobei mindestens einmal die Messung der Dicke an der Einzellage der Folie erfolgt.

Die DE 10 2016 012 424 A1 offenbart ein Verfahren zum Betreiben einer Blasfolienanlage, bei dem aus dem Folienblaskopf eine Schlauchfolie mit zwei Dünnstellen austritt, die im flachgelegten Zustand der Schlauchfolie die Randbereiche bilden und in einer Abtrenneinrichtung abgeschnitten werden.

Bei der Längsverstreckung in einer Reckanlage wird die Folie entsprechend des Reckgrades in Maschinenrichtung gedehnt und dadurch die Foliendicke reduziert. Bei flachgelegten Schlauchfolien und bei Folienbahnen schnürt die Folie gleichzeitig in Querrichtung ein, wodurch sich die Breite der Folie verringert. Diese Einschnürung hat zur Folge, dass die gereckte Folie von der Folienmitte in Richtung der Folienränder zunehmend dicker wird, obwohl sie zuvor im Folienblasverfahren auf eine möglichst konstante Dicke geregelt wurde. Besonders ausgeprägt ist diese Dickenzunahme in den Folienrandbereichen. Dieses verursacht beim anschließenden Aufwickeln der Folie einen Kantenaufbau am Folienwickel. Die Folienbahn wird an den Rändern mit zunehmendem Wickeldurchmesser immer mehr gedehnt, was für die weitere Verarbeitung wie z.B. Drucken oder Laminieren stark nachteilig ist.

Durch Maßnahmen wie möglichst kleiner Reckspalt, geeignete Walzenbeschichtung, mechanisches oder elektrostatisches Festhalten der Folienränder, optimierte Temperaturführung oder geeignete Auswahl der Kunststoffmaterialien kann die Einschnürung und damit ein Kantenaufbau am Folienwickel reduziert werden. Zusätzlich werden den Schlauchfolien im Herstellungsverfahren Dünnstellen aufgeprägt, um dem Kantenaufbau entgegen zu wirken. Dies ist für viele nachfolgende Verarbeitungsschritte aber nicht ausreichend. Nur durch Besäumen der Folienränder hat die verbleibende Folienbahn eine ausreichend geringe Abweichung des Foliendickenprofils von der Foliensolldicke, welche für das anschließende Aufwickeln der Folienbahn und Weiterverarbeiten erforderlich ist. Durch das Besäumen geht aber Folienbreite verloren.

Der Erfindung liegt daher die Aufgabe zugrunde eine Lösung zu schaffen, die es ermöglicht, eine Schlauchfolie in einer Folienblasanlage mit Flachlegung und Reversierung im Wendeabzug in einer Reckanlage monoaxial in Maschinenrichtung so zu verstreckten, dass die Endfolien ein Foliendickenprofil mit möglichst geringer Dickenzunahme von der Folienmitte zu den Folienrändern aufweist und eine Planlageverbesserung der Folie erzielt wird. Gleichzeitig soll der Verlust an Folienbreite durch das Abtrennen von Randstreifen möglichst geringgehalten werden.

Bei einem Verfahren zur Regelung der Foliendicken der eingangs beschriebenen Art wird die Aufgabe erfindungsgemäß durch ein Verfahren gemäß dem Anspruch 1 und durch eine Vorrichtung gemäß dem Anspruch 11 gelöst.

Bei dem erfindungsgemäßen Verfahren zur Regelung der Foliendicken wird die Aufgabe unter anderem dadurch gelöst, dass das Foliendickenprofil der in der Folienblasanlage hergestellten Schlauchfolie so geregelt wird, dass durch das Recken eine Folie mit einem Foliendickenprofil über die Folienbreite mit möglichst geringen Abweichungen von einer Foliensolldicke über die gesamte Folienbreite hergestellt wird. Als Grundlage für die Regelung der Foliendicke dienen dabei die Messung des Foliendickenistprofils vor dem Recken an der Schlauchfolie und an mindestens einer Einzellagenfolie nach dem Recken. Um das Regelergebnis weiter zu optimieren prägen Stellglieder der segmentierten Regelzonen der Schlauchfolie Dünnstellen definierter Geometrie auf, um die durch die Laufrichtung des reversierenden Wendeabzugs beeinflusste Dünnstellengeometrie zu kompensieren.

Bei der Herstellung von Schlauchfolien nach dem Stand der Technik werden üblicherweise Foliendickenprofilregelsysteme mit segmentierten Regelzonen verwendet. Ziel ist es Schlauchfolien mit Foliendickenprofilen zu erhalten, deren Dickenabweichungen über den Umfang der Schlauchfolien möglichst gering ist. Dazu ist nach dem Folienblaskopf und vor der Flachlegung eine Messeinrichtung angeordnet, die das Foliendickenistprofil über den Umfang der Schlauchfolie erfasst. Es erfolgt ein Vergleich des Ist- mit dem Sollprofil und bei Abweichungen werden definierte Regeleingriffe in den Folienblasprozess vorgenommen.

Ist in der Folienblasanlage eine Reckanlage integriert wird zusätzlich zu der oben beschriebenen Messung eine zweite Messung des Foliendickenistprofils durchgeführt, welche die flachgelegte Schlauchfolie nach dem Recken über die Folienbreite vermisst. Beide Profile werden einer kaskadierten Regelung zugeführt um definierte Regeleingriffe in den Folienblasprozess vorgenommen.

Die Schlauchfolie wird nach dem Erkalten in einer Flachlegung flachgelegt und über einen reversierenden Wendeabzug geführt. Der reversierende Wendeabzug hat die Aufgabe durch die Verlegung des zum Folienblaskopf ortsfesten Dickenprofils über die Breite der flachgelegten Folie, die Rollenqualität der aufgewickelten Folien zu verbessern. Durch die Verlegung der Dick- und Dünnstellen über die Rollenbreite entstehen Wickel ohne Fehlstellen, den so genannte Kolbenringen.

Die flachgelegte Schlauchfolie wird einer Reckanlage, auch MDO genannt, zugeführt und monoaxial in Maschinenrichtung verstreckt. Die Reckanlage ist nach dem reversierenden Wendeabzug angeordnet.

Alternativ kann eine Reckanlage nach der Flachlegung im Abzug angeordnet sein. Dem Recken folgt dann die Reversierung der Schlauchfolie.

Unter Reckanlage ist hier jede Vorrichtung zu verstehen, die eine Längenänderung der Folienbahn erzielt. Hierunter ist sowohl das Verstrecken zu verstehen, welches zu einer irreversiblen als auch zu einer reversiblen Verstreckung der Folie führt.

Die gereckte Folie wird im Wickler zu Wickeln aufgerollt werden.

Erfolgt das Recken nach dem Wendeabzug wird die flachgelegte Schlauchfolie zwischen Wendeabzug und vor der Reckanlage einseitig oder beidseitig an den Kanten in einer Trennvorrichtung aufgetrennt.

Die flachgelegte beidseitig aufgetrennte Schlauchfolie wird danach vereinzelt und einzeln zwei Reckanlagen zugeführt. Alternativ kann die beidseitig aufgeschnittene Schlauchfolie auch als Doppelllagenfolienbahn, also übereinanderliegend einer Reckanlage zugeführt werden. Ist die flachgelegte Schlauchfolie nur einseitig aufgetrennt, wird sie aufgefaltet und als Einzellagenfolienbahn der Reckanlage zugeführt.

Sie kann aber auch als flachgelegte Schlauchfolie direkt der Reckanlage zugeführt werden und im Anschluss daran einseitig oder beidseitig an den Kanten aufgetrennt werden.

Ist die Reckanlage im Abzug angeordnet, erfolgt das einseitige oder beidseitige auftrennen nach dem Wendeabzug. Alternativ wird die Schlauchfolie vor dem Abzugswalzenpaar der Flachlegung aufgetrennt.

In dem Fall, dass die Randbereiche nicht ausreichend dünn sind, werden an jeder Seite der Doppelllagen- oder Einzellagenfolienbahn Randstreifen definierter Breite abgetrennt, sodass nur der mittlere Bereich der Folienbahn mit einheitlicher Dicke im Wickler zu Wickeln aufgewickelt wird.

Der Folienrandbeschnitt erfolgt nach dem Recken und vor dem Aufwickeln der Folienbahn. Eine Vorrichtung für den Randbeschnitt kann als eigene Vorrichtung zwischen Reckanlage und Wickler vorgesehen sein, sie kann aber auch in der Reckanlage oder im Wickler integriert sein.

Die Einzellagenfolienbahnen können schließlich dem Wickler zugeführt werden. Sie werden entweder einzeln je einem Wickler zugeführt oder sie werden übereinanderliegend, als Doppelllagenfolienbahn dem Wickler zugeführt und zu Wickeln aufgewickelt.

Die Beeinflussung des Foliendickenprofils erfolgt über segmentierten Regelzonen, z.B. durch Lufttemperieren oder Luftvolumenregelung, alternativ auch über Wärmequellen wie Infrarotquellen.

Die segmentierten Regelzonen können im Folienblaskopf, in einem feststehenden oder rotierenden Kühlring, in einer Dickenregeleinheit zwischen Folienblaskopf und Flachlegung oder in einer nachfolgend angeordneten Dickenregeleinheit, die sich synchron zum reversierenden Wendeabzug bewegt, integriert sein. Es können auch mehrere segmentierte Regelzonen kombiniert werden.

Um Schlauchfolien, welche gereckt werden, mit einheitliche Foliendicke zu erhalten, werden Foliendickenprofilregelsysteme mit segmentierten Regelzonen eingesetzt. Eine Messeinrichtung zur Erfassung des Foliendickenistprofils im Folienblasprozess ist vor dem Recken vorzugsweise zwischen Folienblaskopf und Abzug angeordnet. Alternative kann sie auch zwischen Abzug und Reckanlage angeordnet sein. Im ersten Fall wird die Foliendicke über den Umfang der Schlauchfolie gemessen und damit an einer einzelnen Lage der Folie. Im zweiten Fall wird die Foliendicke über die Breite der flachgelegten Schlauchfolie, der Doppelllagenfolienbahn, gemessen. Das gemessene Foliendickenistprofil mit dem Sollprofil verglichen, um bei Abweichungen über segmentierten Regelzonen definierte Eingriffe in den Folienblasprozess vorzunehmen.

Um die Einflüsse des Reckprozesses in Form von Aufdickungen im Randbereich der Folienbahn entgegen zu wirken, erfolgt eine zweite Messung des Foliendickenistprofils nach dem Recken und vor dem Aufwickeln der Folie. Es ist aus dem Stand der Technik bekannt, die Foliendicke an der Doppelllagenfolienbahn über die Breite zu vermessen.

Erfindungsgemäß wird das zweite Foliendickenistprofil über die Breite der beidseitig an den Kanten aufgetrennten und vereinzelten zwei Einzellagenfolienbahn gemessen.

In einer anderen Ausgestaltung der Erfindung wird das Foliendickenistprofil einmal über die Breite der Doppelllagenfolienbahn und einmal über die Breite einer der beiden Einzellagenfolienbahnen gemessen. In diesem Fall wird das Foliendickenprofil der zweiten Einzellagenfolienbahn aus der Differenz des Profils von Doppelllagenfolienbahn und gemessener Einzellagenfolienbahn berechnet.

In einer weiteren Ausgestaltung der Erfindung wird das Foliendickenistprofil über die Breite der einseitig an einer Kante der flachgelegten Schlauchfolie aufgetrennten und aufgefalteten Einzellagenfolienbahn gemessen.

Durch die Messung an mindestens einer Einzellagenfolienbahn ist es möglich die Folie genauer und vollständig zu vermessen. Diese genauere Messung ermöglicht ein genaueres ausregeln der Foliendicke, speziell in den Randbereichen über die segmentierten Regelzonen.

Wird das Foliendickenistprofil, wie aus dem Stand der Technik bekannt, an der Doppelllagenfolienbahn nach dem Recken vermessen, erhält man die Summe der Dicke aus beiden übereinanderliegenden Folienbahnen. Dabei kann es passieren, dass eine Folienhälfte am Rand dünner ist als die andere Folienhälfte. Dies kann vermieden werden, wenn das Foliendickenistprofil über die Breite der Folienbahn an der Einzellagenfolienbahn gemessen wird.

In einer weiteren Ausgestaltung der Erfindung wird das Foliendickenistprofil nach dem Recken und vor dem Aufwickeln nicht über die gesamte Breite der Folienbahn gemessen, sondern nur über die Breite der Randbereiche, in denen die stärksten Abweichungen in der Foliendicke durch das Recken und das Aufprägen der Dünnstellen auftreten.

In einer weiteren Ausführungsform der Erfindung erfolgt die Messung des Foliendickenistprofils an den abgetrennten Randstreifen und die verbleibenden Hauptfolie mit einem Sensor oder mit getrennten Sensoren. Dies bringt den Vorteil, dass hier eine genaue und vollständige Messung aller Teilbereiche erfolgt.

In einer anderen Ausgestaltung der Erfindung kann das zweite Foliendickenistprofil nach dem Randbeschnitt nur an der verbleibenden Hauptfolienbahn gemessen werden. Nachteilig hierbei ist die weniger ausgeprägte Beeinflussung des Folienprofils der Kanten und der damit größeren Verlust an Folienbreite.

Es ist auch möglich das erste und das zweite Foliendickenistprofil mehrmals nacheinander zu vermessen.

In einer bevorzugten Ausgestaltung der Erfindung erfolgt der Randbeschnitt nach der zweiten Messung über die Folienbreite und vor dem Aufwickeln der Folienbahn. Aus dem Foliendickenistprofil der zweiten Messung kann dann die Breite der noch verbleibenden Dickstellen oder Dünnstellen in den Randbereichen abgeleitet werden und die Breite des abzutrennenden Randstreifens bestimmt werden. Die Position der Messer in der Vorrichtung zum Abtrennen der Randstreifen kann dann manuell oder automatisch eingestellt werden.

Die Breite der Randstreifen wird nach jedem Rollenwechsel im Wickler erneut angepasst.

In einer weiteren Ausgestaltung der Erfindung erfolgt der Randbeschnitt vor dem Recken. Dies ermöglicht das Entfernen von eingeschlossener Luft zwischen den Folienbahnen. Außerdem können so zu dicke Kanten oder Randfalten entfernet werden.

Da die flachgelegte Schlauchfolienbahn beim Recken einschnürt und an den Folienrandbereichen Dickstellen auftreten, ist der vorgegebene Foliendickensollwert des Umfangsprofils im Folienblasprozess nicht konstant, sondern wird so eingestellt, dass nach der monoaxialen Verstreckung in Maschinenrichtung durch Dickenabweichungen während des Verstreckens eine Folie mit einem Dickenprofil mit möglichst geringen Abweichungen über die gesamte Folienbreite entsteht. Beispielsweise wird im Folienblasprozess eine Schlauchfolie hergestellt, die zwei gegenüberliegende Dünnstellen aufweist. Die Flachlegung der Schlauchfolie erfolgt nun so, dass die Dünnstellen die Folienrandbereiche bilden und die verstreckte Folie dann ein Dickenprofil mit möglichst geringen Abweichungen von der Foliensolldicke aufweist. Gleiches gilt für Schlauchfolien die beidseitig aufgeschnitten werden. Im Falle einer Schlauchfolie die einseitig aufgeschnitten wird, wird im Folienblasprozess eine Schlauchfolie mit nur einer Dünnstelle hergestellt. In der Mitte dieser Stelle wird die Schlauchfolie aufgetrennt, um die Dünnstelle nach dem Auftrennen auf die Folienrandbereiche links und rechts aufzuteilen, sodass nach dem Recken eine Folie mit einem Dickenprofil mit nur geringen Abweichungen entsteht.

Für das Aufbringen der Dünnstellen auf die Schlauchfolie wurden die Stellglieder der segmentierten Regelzonen bisher um die aufzubringende Dünnstelle herum symmetrisch angesteuert z.B. in Form einer Gaußverteilung, dadurch kam es durch den Einfluss des reversierenden Wendeabzugs zu unterschiedlich ausgeprägten Dünnstellengeometrie an den Flanken der Dünnstellen.

Um das Regelergebnis weiter zu optimieren wird durch einzelnes Ansteuern und / oder regeln der einzelnen Stellglieder der segmentierten Regelzonen der Schlauchfolie Dünnstellen definierter Geometrie aufgeprägt, um die durch die Laufrichtung des reversierenden Wendeabzugs beeinflusste Dünnstellengeometrie zu kompensieren.

Es kommt in Laufrichtung der Reversierung zu einer anders ausgeformten Flanke der Dünnstelle als gegen die Laufrichtung. Bei der Bewegung in Laufrichtung der Reversierung erfolgt die Bewegung in die kalte Folien hinein sodass die Folie weniger ausgeprägt auf den Regeleingriff reagiert, gegen die Laufrichtung der Reversierung erfolgt die Bewegung in die warme Folie hinein, sodass die Folie stärker auf den Regeleingriff reagiert. So bilden sich Dünnstellen mit unterschiedlich ausgeformten Flanken aus.

Durch die Messung der Dicke der Randbereiche an der Einzellagenfolienbahn kann das Foliendickenistprofil an jeder Seite der Folienbahn bei der Messung genau erfasst werden, so dass die Stellglieder der segmentierten Regelzone einzeln angesteuert werden und so ein bedarfsgerechtes asymmetrisches Dünnstellenprofil auf die Folie aufgeprägt wird, sodass eine Folie mit einer Dünnstelle mit annähernd symmetrischen Flanken entsteht.

Erfindungsgemäß wird das Aufprägen der Dünnstellen der Regelung überlagert und mit Hilfe je einer unterschiedlichen Funktion für die rechte und die linke Flanke der Dünnstelle ausgeführt. Diese Funktion trägt dem unterschiedlichen Verhalten der Folie beim Aufbringen der Dünnstelle durch die Laufrichtung der Reversierung Rechnung. Unter linker und rechter Seite der Dünnstelle ist jeweils eine Seite der Dünnstelle, gesehen von der Kante der flachgelegten Schlauchfolie aus, zu verstehen.

Die Folie wird nach dem Abkühlen flachgelegt und in einen reversierenden Wendeabzug geführt, wo sie über die Wendestangen und Umlenkrollen des Wendeabzuges so verlegt wird, dass sie immer auf die stationäre horizontale Umlenkwalze nach dem Abzug trifft, wo sie senkrecht nach unten zur Reckanlage und/oder Wickler umgelenkt wird. Durch diese Reversierbewegung wird das aktuelle Foliendickenprofil kontinuierlich verlagert, was bedeutet, dass die vorgegebenen Dünnstellen in der Folie, die im stationär stehenden Extrusionsbereich der Anlage hergestellt wird, der Reversierbewegung des Wendeabzuges folgen müssen, damit die Folie mit dem benötigten Foliendickensollprofil, also mit den dünneren Folienrändern, der Reckanlage zugeführt wird. Dies erfolgt dadurch, dass den segmentierten Regelzonen der Folienprofilregelung ein Offset überlagert wird, der den Winkelversatz durch den rotierenden Abzug berücksichtigt und der Drehung der Wendestange nachfolgt. Es erfolgt also eine Zuordnung eines oder mehrerer Umfangspunkte der im Abzug flachgelegten Schlauchfolie zu einer oder mehreren segmentierten Regelzonen. Der Regelalgorithmus sorgt dafür, dass die Dünnstellen im Sollprofil parallel zum Wendeabzug reversieren.

Das vorgegebene Foliendickensollprofil für den Folienblasprozess wird aus dem nach der Reckanlage gemessenen Foliendickenistprofil über die Breite der Folienbahn, über einen Algorithmus errechnet und kontinuierlich korrigiert, wodurch auch die durch den Reckprozess entstehenden Abweichungen im Dickenprofil der fertigen Folie ausgeregelt werden und eine Steigerung der Rollenqualität erreicht wird, damit Folienwickel mit gleichmäßigen Wickeldurchmessern hergestellt werden. Gleichzeitig wird dadurch erreicht, dass die Breite der Folienstreifen, welche beim Besäumen der Folie beidseitig weggeschnitten werden, deutlich reduziert werden.

In einer weiteren Ausgestaltung der Erfindung wird das Rollenprofil gemessen. Dazu kann in der zweiten Messeinrichtung das Foliendickenistprofil über die Wickelbreite summatorisch erfasst werden, wodurch sich die Möglichkeit ergibt, das Foliendickensollprofil mit Werten des Rollenistprofils zu überlagern, um selbst kleinste Dickenabweichungen, die immer im gleichen Bereich der fertigen Folie auftreten, zu eliminieren, da sie erst nach einem längeren Zeitraum festzustellen sind, wenn sie sich in Summe durch Veränderungen des Rollendurchmessers zeigen.

In einer weiteren Ausgestaltung der Erfindung wird das Rollenprofil, an dem sich bildenden Wickel mit einer Kamera erfasst. Es kommt eine Zeilenkamera oder eine Flächenkamera zum Einsatz. Aus dem Rollenprofil kann nun erfasst werden, ob der Randstreifenbeschnitt in seiner Breite erfolgreich war, oder ob er angepasst werden muss.

Die Regelung zur Ansteuerung der einzelnen segmentierten Regelzonen wird aus einer Überlagerung der nachfolgend genannten Foliendickenprofile über einen Algorithmus berechnet. Diese segmentierten Regelzonen können im Folienblaskopf, in einem feststehenden oder rotierenden Kühlring, in einer Dickenregeleinheit zwischen Folienblaskopf und Flachlegung oder in einer nachfolgend angeordneten Dickenregeleinheit, die sich synchron zum reversierenden Wendeabzug bewegt, integriert sein. Es können auch mehrere segmentierte Regelzonen kombiniert werden.

Die Dickenprofile sind:
- das Grundprofil, welches zwischen Folienblaskopf und Reckanlage das Foliendickenistprofil am Umfang der Schlauchfolie oder zwischen Abzug und Reckanlage über die Breite der flachgelegten Folie erfasst
- das Reckprofil, welches nach der Reckanlage die gesamte Folienbreite erfasst, es berücksichtigt den Winkelversatz durch den reversierenden Wendeabzug und den Ausgleich der Dicke des Folienrandbereichs während des Reckens
- das Rollenprofil, welches eine Summe der gemessenen Reckprofile mit einer entsprechenden Bewertung darstellt oder über eine Kamera am sich bildenden Wickel erfasst wird

Zusätzlich wird die Geometrie der Dünnstellen durch die Laufrichtung des reversierenden Wendeabzugs berücksichtigt, einer Überlagerung eines Offsets, der den Winkelversatz durch den rotierenden Abzug berücksichtigt und der Drehung der Wendestange nachfolgt berücksichtigt und kontinuierlich nachgeregelt.

Dies stellt eine kaskadierte Regelung dar, da folgende Regelkreise überlagert sind:
- Regelung der Foliendicke über den Schlauchfolienumfang während des Folienblasprozesses
- Regelung der Foliendicke über die Folienbreite der verstreckten Folie
- Regelung der Wickeldurchmesser über die Wickelbreite.

Wobei mindestens eine Überlagerung von Grund und Reckprofil erfolgt.

Das Foliendickensollprofil kann auch manuell in das Regelsystem eingegeben werden, wobei es dann aber kontinuierlich der Drehung der Wendestangen nachgeführt werden muss.

Das Verfahren zur Regelung der Foliendicke kann auch in Anlagen eingesetzt werden, bei denen kein Wendeabzug installiert ist. Dann entfällt das nachführen. Weitere Einzelheiten, Merkmale und Vorteile des Gegenstandes der Erfindung ergeben sich aus den Unteransprüchen sowie aus der nachfolgenden Beschreibung der zugehörigen Zeichnungen, in der -beispielsweise- ein bevorzugtes Ausführungsbeispiel der Erfindung dargestellt ist.

In den Zeichnungen zeigt:
Fig. 1: Folienblasanlage mit nachgeschalteter Reckanlage in der das erfindungsgemäße Verfahren zur Regelung der Foliendicke Anwendung findet.
Fig. 2: Foliendickensollprofil eines Schlauchfolie mit zwei Dünnstellen mit asymmetrischer Dünnstellengeometrie

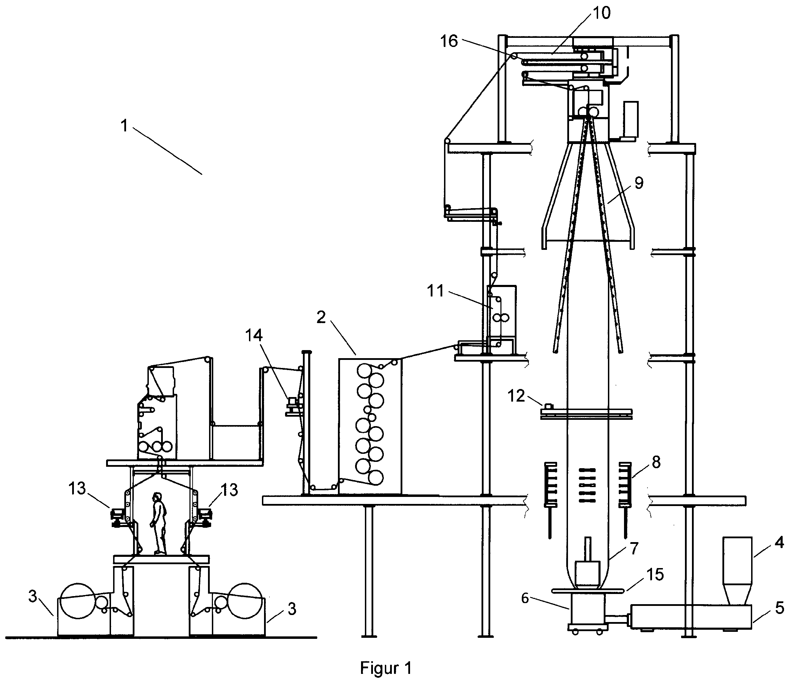

Die Figur 1 zeigt eine Folienblasanlage (1) mit nachgeschalteter Reckanlage (2) und zwei Wickler (3). Über eine Dosiervorrichtung (4) wird das zu verarbeitende Kunststoffgranulat einem Extruder (5) zugeführt, in diesem aufgeschmolzen, homogenisiert und dem Folienblaskopf (6) zugeführt. Bei der Herstellung von Mehrschichtfolien kommen entsprechend der Schichtzahl mehrere Extruder zum Einsatz. Der Folienblaskopf (6) weist eine Ringdüse auf, aus der die extrudierte Kunststoffmasse austritt. Durch den Folienblaskopf (6) erfolgt die Zuleitung von Kühlluft zum Aufblasen der Schlauchfolie (7). Die Schlauchfolie (7) wird von außen über einem Kühlring (15) gekühlt und durch einen Kalibrierkorb (8) geführt. Nach dem Erstarren des Kunststoffs wird die Schlauchfolie (7) in der Flachlegung (9) flachgelegt und mit dem reversierenden Wendeabzug (10) kontinuierlich abgezogen und verlegt. Danach wird die Folie in der Reckanlage (2) monoaxial in Maschinenrichtung verstreckt.

Die Schlauchfolie (7) wird vor der Reckanlage (2) in einem Vorabzug (11) an beiden Seiten aufgeschnitten und als Doppelllagenfolienbahn der Reckanlage (2) zugeführt. Alternativ kann eine Annealingvorrichtung oder Temperiervorrichtung mit dem Vorabzug (11) kombiniert werden, hier nicht dargestellt. Nach dem Recken werden die beiden aufeinanderliegenden Einzelfolienbahnen getrennt und je einer Wickelstation (3) zugeführt. In den Wicklern (3) erfolgt der Folienrandbeschnitt, im Anschluss werden die besäumten Folien zu Folienwickeln aufgerollt.

Die Folienblasanlage (1) weist eine Foliendickenprofilregelsystem auf. Es besteht aus segmentierten Regelzonen und mindestens zwei Messstellen (12) und (13) für die Erfassung des Foliendickenistprofils.

Zur Regelung des Foliendickenprofils ist die Erfassung des Foliendickenistprofils, an mindestens zwei Stellen, erforderlich. Das Foliendickenistprofils am Umfang der Schlauchfolien (7) wird zwischen Folienblaskopf (6) bzw. segmentierter Regeleinheit im Kühlring (15) und Flachlegung (9) bzw. Wendeabzug (10) an der Messeinrichtung (12) erfasst. Die Messeinrichtung (12) zur Messung des Foliendickenistprofils der aufgeblasenen Schlauchfolie (7) ist bevorzugt in konstanter Höhe über dem Folienblaskopf (6) rotierend um die Schlauchfolie (7) angeordnet.

Das Foliendickenistprofil jeder der beiden verstreckten Einzellagenfolienbahnen über deren Breite wird zwischen der Reckanlage (2) und dem Wickler (3) nach dem vereinzeln der Bahnen an der Messeinrichtung (13) erfasst.

Über die Anlagensteuerung wird der gesamte Folienblasvorgang geregelt, insbesondere die Antriebe, Kühlluft, die segmentierte Regelzonen, die sich im Kühlring (15), im Folienblaskopf (6) oder in einer extra Dickenregeleinheit befindet sowie die Abzugsgeschwindigkeit der Schlauchfolie (7).

Die von den Messeinrichtungen (12) und (13) gemessenen Foliendickenistprofile werden der Anlagensteuerung zugeführt und durch ein Soll-/Ist-Vergleich Signale an die segmentierte Regelzone weitergegeben.

Alternativ ist es auch möglich die Reckanlage (2) in den Wendeabzug nach der Flachlegung (9) und vor den Wendestangen (16) zu integrieren, dies ist in den Abbildungen nicht dargestellt.

Die Doppelllagenfolienbahn wird vor oder nach dem Recken aufgeschnitten. Nach dem Wendeabzug (10) wird die Schlauchfolie (7) in zwei Einzellagenfolienbahn aufgeteilt und jede Einzellagenfolienbahn je einer Wickelstation (3) zugeführt. Die erste Messstelle (12) befindet sich ebenfalls vor der Flachlegung (9) und misst das Foliendickenistprofil über den Umfang der Schlauchfolie (7). Die zweiten Messstellen (13) befinden sich nach dem Wendeabzug (10) nach dem Auftrennen der flachgelegten und gereckten Schlauchfolie (7) in die Einzellagen und vor dem Wickler (3) und messen das Foliendickenistprofil über die Folienbreite jeder Einzellagenfolienbahn. Alternative kann die Messung des Foliendickenistprofils nach dem Recken auch über eine der Messstellen (13) an der Einzellagenfolienbahn und über die Messstelle (14) an der Doppellagenfolienbahn erfolgen.

Vor dem Aufwickeln der Folienbahnen im Wickler (3) erfolgt der Randbeschnitt.

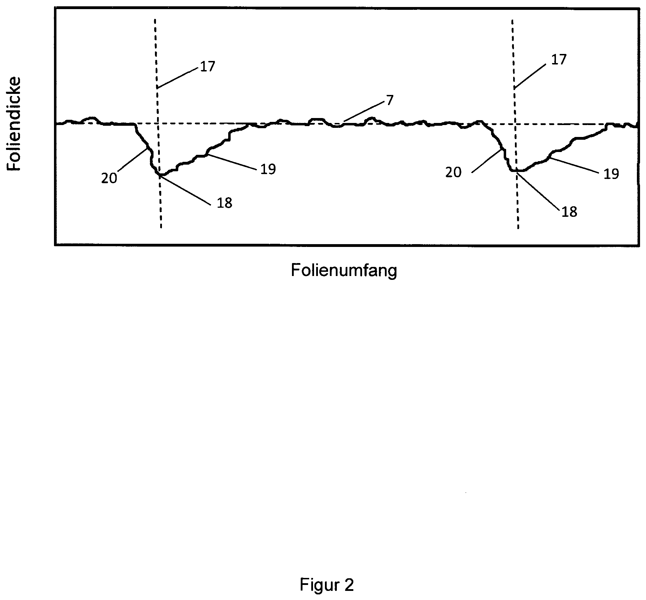

Die Figur 2 zeigt ein fehlerbehaftetes Foliendickenistprofil mit zwei Dünnstellen 18, welche nach dem erfindungsgemäßen Verfahren ausgeregelt werden soll. Die Stellglieder der Regelzone, die der Schlauchfolie (7) die gegenüberliegenden Dünnstellen (18) aufprägen werden asymmetrisch angesteuert. Dabei wird die Laufrichtung des reversierenden Wendeabzugs (10) berücksichtigt, indem in Laufrichtung der Reversierung des Wendeabzugs der Dünnstelle (18) eine flache Flanke (19) aufgeprägt wird, da die Bewegung in die kalte Folien hineinläuft und indem gegen die Laufrichtung der Reversierung des Wendeabzugs der Dünnstelle (18) eine steile Flanke (20) aufgeprägt wird, da die Bewegung in die warme Folien hineinläuft.

Die Schlauchfolie wird an den beiden Positionen (17) aufgetrennt und dann die beiden flachen Folienbahnen einer Reckanlage (2) oder jeweils einer separaten Reckanlage zugeführt. Infolge wird die Folie vermessen, der Rand beschnitten und im Folienwickler (3) aufgewickelt.

### Bezugszeichenliste

- 1: Folienblasanlage
- 2: Reckanlage
- 3: Wickler
- 4: Dosiervorrichtung
- 5: Extruder
- 6: Folienblaskopf
- 7: Schlauchfolie
- 8: Kalibrierkorb
- 9: Flachlegung
- 10: Wendeabzug
- 11: Vorabzug
- 12: Dickenmesseinrichtung
- 13: Dickenmesseinrichtung
- 14: Dickenmesseinrichtung
- 15: Kühlring
- 16: Wendestange
- 17: Schnittstelle
- 18: Dünnstelle
- 19: flache Flanke der Dünnstelle
- 20: steile Flanke der Dünnstelle

## Patentansprüche

1. Verfahren zur Regelung der Foliendicke von verstreckten Schlauchfolien (7), die im Folienblasverfahren hergestellt, in einem Wendeabzug (10) flachgelegt und verlegt, in einer Reckanlage (2) monoaxial in Maschinenrichtung verstreckt und in einem Wickler (3) aufgewickelt wird
**wobei** das Foliendickenprofil der in der Folienblasanlage (1) hergestellten Schlauchfolie (7) mit einem Foliendickenprofilregelsystem aus segmentierten Regelzonen und mindestens zwei Messeinrichtungen (12, 13) für die Foliendicke, so geregelt wird,
**dass** das vorgegebene Foliendickensollprofil Abweichungen von einer einheitlichen Foliendicke in Form von einer oder zwei gegenüberliegender Dünnstellen (18) aufweist, welche der Kompensation der Foliendickenänderung über die Folienbreite die bei der monoaxialen Verstreckung in Maschinenrichtung entstehen, dienen
**so dass** durch das Recken Folien mit einem Foliendickenprofil über die Folienbreite mit möglichst geringen Abweichungen von der Foliensolldicke über die Folienbreite hergestellt werden,
wobei
der Schlauchfolie (7) durch einzelnes Ansteuern und / oder Regeln der einzelnen Stellglieder der segmentierten Regelzonen Dünnstellen (18) definierter Geometrie aufgeprägt werden, **dadurch gekennzeichnet, dass**
Einflüsse der Laufrichtung des Wendeabzugs (10) auf die Dünnstellengeometrie berücksichtigt werden, wobei
im Regelalgorithmus der Regelung für die linke und die rechte Flanke (19, 20) einer Dünnstelle (18) unterschiedliche Funktionen hinterlegt sind.

2. Verfahren nach Anspruch 1 **dadurch gekennzeichnet, dass**
die Flanken (19, 20) der Dünnstellen (18) je nach Laufrichtung des Wendeabzugs (10) unterschiedlich in der Geometrie ausgeprägt sind.

3. Verfahren nach Anspruch 1 bis 2 **dadurch gekennzeichnet, dass**
ein mindestens erstes Foliendickenistprofil der Schlauchfolie (7) vor dem Recken, bevorzugt am Umfang der aufgeblasenen Schlauchfolie (7) zwischen Folienblaskopf (6) und Flachlegung (9), gemessen wird und ein mindestens zweites Foliendickenistprofil der flachgelegten und gereckten Schlauchfolie (7) nach dem Recken und vor dem Aufwickeln der Folienbahn gemessen wird.

4. Verfahren nach Anspruch 3 **dadurch gekennzeichnet, dass**
das zweite Foliendickenistprofil über die Folienbreite an mindestens einer Einzellagenfolienbahnen, bevorzugt an beiden Einzellagenfolienbahnen der aufgetrennten flachgelegten Schlauchfolienbahn nach dem Recken und vor dem Aufwickeln der Folienbahn gemessen wird.

5. Verfahren nach Anspruch 4 **dadurch gekennzeichnet, dass**
das zweite Foliendickenistprofil über die Breite der Randstreifen an der Einzellagenfolienbahn nach dem Recken und vor dem Aufwickeln gemessen wird.

6. Verfahren nach einem der vorangegangenen Ansprüchen **dadurch gekennzeichnet, dass**
die extrudierte Schlauchfolie (7) über den Umfang auf ein vorgegebenes Foliendickensollprofil mittels eines Foliendickenprofilregelsystems geregelt wird.

7. Verfahren nach einem der vorangegangenen Ansprüche **dadurch gekennzeichnet, dass**
der Regelalgorithmus zur Ansteuerung der einzelnen segmentierten Regelzonen aus einer Überlagerung des
- des Grundprofils aus der Foliendickenprofilregelung der Folienblasanlage (1)
- des Reckprofils aus der Verlegung der Schlauchfolie (7) durch den Wendeabzug (10) und den Einflüssen durch den Reckprozess
- und unter Berücksichtigung der Geometrie der Dünnstellen (18) durch die Laufrichtung des reversierenden Wendeabzugs (10) und einer Überlagerung eines Offsets der den Winkelversatz durch den rotierenden Abzug berücksichtigt und der Drehung der Wendestange nachfolgt und kontinuierlich nachgeregelt wird
- und wahlweise des Rollenprofils aus der Bewertung des Folienwickels besteht

8. Verfahren nach Anspruch 7 **dadurch gekennzeichnet, dass**
das Rollenprofil summatorisch aus der Messung des Foliendickenistprofils über die Wickelbreite in der zweiten Messeinrichtung erfasst wird.

9. Verfahren nach Anspruch 8 **dadurch gekennzeichnet, dass**
das Rollenprofil am sich bildenden Wickel mit einer Kamera, bevorzugt mit einer Zeilen- oder einer Flächenkamera erfasst wird.

10. Verfahren nach einem der vorangegangenen Ansprüche **dadurch gekennzeichnet, dass**
aus der Messung des zweiten Foliendickenistprofil an der Einzellagenfolienbahn die Randstreifenbreite, welche beim nachfolgenden Randstreifenbeschnitt abgetrennt wird, abgeleitet wird und beim Randstreifenbeschnitt manuell oder automatisch eingestellt wird.

11. **Vorrichtung** zur Durchführung des Verfahrens nach Anspruch 1 bis 10 wobei
die Vorrichtung aus einer Folienblasanlage (1) mit Wendeabzug (10) und mindestens einer Reckanlage (2) sowie mindestens einem Wickler (3) und mindestens einem Foliendickenprofilregelsystem besteht,
wobei
der Schlauchfolie (7) durch einzelnes Ansteuern und / oder Regeln der einzelnen Stellglieder der segmentierten Regelzonen Dünnstellen (18) definierter Geometrie aufgeprägt werden, **dadurch gekennzeichnet, dass**
Einflüsse der Laufrichtung des Wendeabzugs (10) auf die Dünnstellengeometrie berücksichtigt werden,
wobei
im Regelalgorithmus der Regelung für die linke und die rechte Flanke (19, 20) einer Dünnstelle (18) unterschiedliche Funktionen hinterlegt sind.

12. Vorrichtung nach Anspruch 11 **dadurch gekennzeichnet, dass**
das Foliendickenprofilregelsystem aus segmentierten Regelzonen, mindestens zwei Messeinrichtungen (12, 13) für die Foliendicke, mindestens eine zur Messung des Foliendickenistprofils der Schlauchfolie (7) nach dem Folienblaskopf (6) und vor der Reckanlage (2), bevorzugt am Umfang der aufgeblasenen Schlauchfolie (7), und mindestens eine zur Messung des Foliendickenistprofils der verstreckten Folien nach der Reckanlage (2), sowie einer Regelungs- und Auswerteeinheit besteht.

13. Vorrichtung nach Anspruch 11 und 12 **dadurch gekennzeichnet, dass**
die Messeinrichtungen (13) zur Messung des Foliendickenistprofils der gereckten Schlauchfolie (7) nach der Reckanlage (2) und vor dem Wickler (3) mindestens an einer der aufgetrennten und vereinzelten Einzellagenfolienbahnen angeordnet ist.

14. Vorrichtung nach Anspruch 11 bis 13 **dadurch gekennzeichnet, dass**
nach der Reckanlage (2) und nach der Messeinrichtung (13) eine Vorrichtung zum Durchführen des Randbeschnitts angeordnet ist, wobei die Positionierung der Schneidvorrichtungen der Vorrichtung zum Durchführen des Randbeschnitts manuell oder automatisch einstellbar ist.

15. Vorrichtung nach Anspruch 11 bis 14 **dadurch gekennzeichnet, dass**
die segmentierten Regelzonen im Folienblaskopf (6), in einem feststehenden oder rotierenden Kühlring (15), in einer Dickenregeleinrichtung zwischen Folienblaskopf (6) und vor der Flachlegung (9), in einer nachfolgend angeordneten Dickenregeleinheit, die sich synchron zum Wendeabzug (10) bewegt oder Kombinationen daraus, integriert sind.

## Claims

1. Process to regulate the thickness of oriented tubular film (7) that is manufactured in a film blowing process, laid flat and repositioned using an oscillating take-off unit (10), oriented monoaxially in machine direction using an orientation unit (2) and subsequently wound with a winder (3),
**whereby** the thickness profile of the film tube (7) produced with the blown film line (1) is regulated using a film thickness profile control system that has segmented control zones and at least two measuring units (12, 13) for the film thickness,
**such that** the specified target film thickness profile exhibits deviations from a uniform film thickness in the form of one or two thin spots (18) opposite each other, which serve to compensate for film thickness changes across the film width which occur during the monoaxial orientation in machine direction,
**so that** film is produced as a result of orientation whose transverse thickness profile has as few deviations as possible from the target film thickness across the entire width of the film web,
**whereby** thin spots (18) of a defined geometry are imprinted on the film tube (7) by means of individual selection and/or control of the individual actuators of the segmented control zones,
**characterised in that**
influences of the running direction of the oscillating take-off unit (10) on the thin spot geometry are taken into consideration.
whereby different functions are integrated into the control algorithm of the control unit for the left-hand and right-hand flank (19, 20) of a thin spot (18).

2. Process in accordance with Claim 1, **characterised in that**
the geometry of the flanks (19, 20) of the thin spots (18) is different as a function of the running direction of the oscillating take-off unit (10).

3. Process in accordance with Claims 1 to 2, **characterised in that**
at least an initial actual film thickness profile of the film tube (7) upstream of orientation, preferably around the circumference of the inflated film tube (7) is measured, and at least a second actual film thickness profile of the laid-flat and oriented film tube (7) downstream of orientation and upstream of winding the film web is measured.

4. Process in accordance with Claim 3, **characterised in that**
the second actual film thickness profile across the film width is measured at oscillating least one of the single-layer film webs, preferably at both single-layer film webs of the slit-open and laid-flat tubular film web downstream of orientation and upstream of winding the film web.

5. Process in accordance with Claim 4, **characterised in that**
the second actual film thickness profile across the width of the edge trims is measured at the single-layer film web downstream of orientation and upstream of winding the film web.

6. Process in accordance with one of the previous claims, **characterised in that**
the extruded film tube (7) is regulated around the circumference to match a specified target film thickness profile by means of a film thickness profile control system.

7. Process in accordance with one of the preceding claims, **characterised in that** the control algorithm to address the individual segmented control zones consists of a superimposition of
- the basic profile derived from the film thickness profile regulation of the film blowing line (1)
- the orientation profile from the repositioning of the film tube (7) by the oscillating take-off unit (10) and the influences of the orientation process
- and under consideration of the geometry of the thin spots (18) caused by the running direction of the oscillating take-off unit (10), an offset value is superposed which takes the angular misalignment caused by the oscillating take-off unit into account and which tracks the movement of the turning bars and is continually adjusted
- and optionally the reel profile from evaluation of the film reel.

8. Process in accordance with Claim 7, **characterised in that**
the reel profile is measured by adding up the film thickness across the winding width derived from measurement of the second actual film thickness profile.

9. Process in accordance with Claim 8, **characterised in that**
the reel profile of the reel as it forms is recorded by a camera, preferably a linescan or area-scan camera.

10. Process in accordance with one of the preceding claims, **characterised in that** the edge trim width which will be cut off during the downstream trimming step is derived from measurement of the second actual film thickness profile at the single-layer film web and is then manually or automatically adjusted.

11. **Equipment** to implement the invention-design process in accordance with Claim 1 to 10, whereby the equipment comprises a film blowing line (1) with oscillating take-off unit (10) and at least one orientation unit (2) as well as at least one winder (3) and at least one film thickness profile control system.
whereby thin spots (18) of a defined geometry are imprinted on the film tube (7) by means of individual selection and/or control of the individual actuators of the segmented control zones,
**characterised in that**
influences of the running direction of the oscillating take-off unit (10) on the thin spot geometry are taken into consideration.
whereby different functions are integrated into the control algorithm of the control unit for the left-hand and right-hand flank (19, 20) of a thin spot (18).

12. Equipment in accordance with Claim 11, **characterised in that**
the film thickness profile control system consists of segmented control zones, at least two measuring devices (12, 13) to measure the film thickness - one to measure the actual thickness profile of the film tube (7) downstream of the die head (6) and upstream of the orientation unit (2), preferably around the circumference of the inflated film tube (7), and at least one to measure the actual thickness profile of the oriented film downstream of the orientation unit (2) - as well as a master control system and evaluation unit.

13. Equipment in accordance with Claims 11 and 12, **characterised in that**
the measuring units (13) to measure the actual film thickness profile of the oriented tubular film (7) downstream of the orientation unit (2) and upstream of the winder (3) are installed at least at one of the slit-open and separate single-layer film webs.

14. Equipment in accordance with Claims 11 to 13, **characterised in that**
a device to perform the edge trimming is located downstream of the orientation unit (2) and downstream of the measuring device (13), whereby positioning of the cutting units of the device to perform the edge trimming can be set to manual or automatic.

15. Equipment in accordance with Claims 11 to 14, **characterised in that**
the segmented control zones are integrated into the film die head (6), into a stationary or rotating cooling ring (15), into a thickness control unit between film die head (6) and collapsing equipment (9) or into a downstream thickness control unit which moves synchronously with the oscillating take-off unit (10), or combinations thereof.

## Revendications

1. Procédé pour le réglage de l'épaisseur de films tubulaires étirés (7) produits par soufflage, mis à plat et repositionnés dans un tireur réversible et ensuite soumis à l'étirage monoaxial dans une installation d'étirage de film en ligne (2) dans le sens de la machine et enroulés par un enrouleur (3),
**selon lequel** le profil d'épaisseur du film tubulaire (7) produit dans l'installation de soufflage (1) est réglé par un système de réglage du profil d'épaisseur qui se compose des zones de réglage segmentées et au moins de deux dispositifs de mesure (12, 13) pour l'épaisseur du film
**de manière à ce que** le profil nominal d'épaisseur déterminé montre des écarts d'une épaisseur de film uniforme sous forme d'une ou de deux zones minces opposées (18) qui servent à la compensation de la modification de l'épaisseur de film par la largeur du film, qui se produisent lors de l'étirage monoaxial dans le sens machine,
**de manière à ce** que le procédé d'étirage produise des films avec un profil d'épaisseur sur toute la largeur ayant le moins possibles d'écarts d'épaisseur nominale sur toute la largeur,
**selon lequel** des zones minces (18) de géométrie définie sont estampées sur le film tubulaire (7) par l'activation et/ou le réglage des différents organes de commande pour les zones de réglage segmentées **caractérisées par le fait que** les influences du sens de marche du tireur réversible (10) sur la géométrie des zones minces sont considérées et **selon lequel** des fonctions différentes sont archivées à l'algorithme de réglage pour régler le flanc gauche et droit (19, 20) d'une zone mince (18).

2. Procédé conforme à la revendication 1, **caractérisé par le fait que**
les flancs (19, 20) des zones minces (18) ont des géométries différentes selon le sens de marche du tireur réversible (10).

3. Procédé conforme aux revendications 1 à 2, **caractérisé par le fait qu'au**
moins un premier profil réel d'épaisseur du film tubulaire (7) est mesuré en amont de l'étirage, de préférence le long du pourtour du film tubulaire gonflé (7), entre la tête de soufflage (6) et le dispositif de mise à plat (9), et au moins un deuxième profil réel d'épaisseur du film tubulaire (7) mis à plat et étiré, en aval de l'étirage et en amont de l'enroulement de la bande de film.

4. Procédé conforme à la revendication 3, **caractérisé par le fait que**
le deuxième profil réel d'épaisseur est mesuré sur toute la largeur du film à au moins une des bandes de film à une couche, de préférence aux deux couches des bandes du film tubulaire coupées et mises à plat en aval de l'étirage et en amont de l'enroulement du film.

5. Procédé conforme à la revendication 4, **caractérisé par le fait que**
le deuxième profil réel d'épaisseur est mesuré sur toute la largeur des lisières de la bande de film à une couche en aval de l'étirage et en amont de l'enroulement de la bande de film.

6. Procédé conforme à une des revendications précédentes, **caractérisé par le fait que**
le film tubulaire (7) extrudé est réglé le long du pourtour pour obtenir un profil d'épaisseur nominal du film déterminé par moyen d'un système de réglage du profil d'épaisseur.

7. Procédé conforme à une des revendications précédentes, **caractérisé par le fait que** l'algorithme de réglage pour la commande des différentes zones de réglage segmentées se compose d'une superposition
- du profil initial résultant du réglage du profil d'épaisseur de film de l'installation de soufflage de film (1),
- du profil d'étirage résultant du repositionnement du film tubulaire (7) par le tireur réversible (10) et des influences du procédé d'étirage,
- et tout en respectant la géométrie des zones minces (18) par le sens de marche du tireur réversible (10) et une superposition d'un offset qui tient compte du décalage angulaire produit par le tireur réversible et qui suit la rotation de la barre de retournement et qui est réglé continuellement,
- et, au choix, du profil de bobinage résultant de l'évaluation de la bobine de film.

8. Procédé conforme à la revendication 7, **caractérisé par le fait que**
le profil de la bobine est saisi de manière sommaire de la mesure du profil réel d'épaisseur au deuxième dispositif de mesure par la largeur de la bobine.

9. Procédé conforme à la revendication 8, **caractérisé par le fait que**
le profil de la bobine se formant est saisi par une caméra, de préférence une caméra linéaire ou une caméra matricielle.

10. Procédé conforme à une des revendications précédentes, **caractérisé par le fait que**
la largeur de la lisière déduite de la mesure du deuxième profil réel d'épaisseur de la bande de film à une couche qui est coupée lors de la coupe suivante de lisière, est réglée manuellement ou automatiquement.

11. Dispositif pour la réalisation du procédé conforme aux revendications 1 à 10, qui comprend une installation de soufflage de film (1) avec tireur réversible (10) et au moins une installation d'étirage en ligne (2) ainsi qu'un enrouleur (3) et au moins un système de réglage du profil d'épaisseur,
**dans lequel** des zones minces (18) de géométrie définie sont estampées sur le film tubulaire (7) par l'activation et/ou le réglage des différents organes de commande pour les zones de réglage segmentées **caractérisées par le fait que** les influences du sens de marche du tireur réversible (10) sur la géométrie des zones minces sont considérées,
**dans lequel** des fonctions différentes sont archivées à l'algorithme de réglage pour régler le flanc gauche et droit (19, 20) d'une zone mince (18).

12. Dispositif conforme à la revendication 11, **caractérisé par le fait que**
le système de réglage du profil d'épaisseur se compose des zones de réglage segmentées et au moins de deux dispositifs de mesure (12, 13) pour l'épaisseur du film, au moins d'un dispositif de mesure pour le profil réel d'épaisseur du film tubulaire (7) en aval de la tête de soufflage (6) et en amont de l'installation d'étirage (2), de préférence le long du pourtour du film tubulaire gonflé (7), et au moins d'un dispositif de mesure du profil réel d'épaisseur du film étiré en aval de l'installation d'étirage (2) ainsi que d'une unité de régulation et d'évaluation.

13. Dispositif conforme aux revendications 11 et 12, **caractérisé par le fait que**
les dispositifs de mesure (13) destinés à la mesure du profil réel d'épaisseur du film tubulaire étiré (7) en aval de l'installation d'étirage (2) et en amont de l'enrouleur (3) sont disposés au moins à une des bandes de film à une couche coupée et séparée.

14. Dispositif conforme aux revendications 11 à 13, **caractérisé par le fait qu'un** dispositif pour la réalisation de la coupe des lisières est disposé en aval de l'installation d'étirage (2) et en aval du dispositif de mesure (13), et le positionnement des dispositifs de coupe du dispositif pour la réalisation de la coupe des lisières est réglable manuellement ou automatiquement.

15. Dispositif conforme aux revendications 11 à 14, **caractérisé par le fait que**
les zones de réglage segmentées sont intégrées dans la tête de soufflage (6), dans un anneau de refroidissement fixe ou rotatif (15), dans une unité de réglage d'épaisseur située entre la tête de soufflage (6) et en amont du dispositif de mise à plat (9), dans une unité de réglage d'épaisseur suivante au mouvement synchronisé avec le tireur réversible (10), ou dans des combinaisons de ceux-ci.
